# EUROPEAN PATENT APPLICATION

(11) **EP 4 554 180 A1**
(43) Date of publication of application: **14.05.2025**
(21) Application number: 23834369.3
(22) Date of filing: 09.02.2023
(51) Int. Cl.: H04L 45/74

(54) **ROUTING INFORMATION PROCESSING METHOD AND SYSTEM, AND NETWORK DEVICE AND STORAGE MEDIUM**

(30) Priority: 05.07.2022 CN 202210794009
(71) Applicant: ZTE Corporation, Shenzhen, Guangdong 518057 (CN)
(72) Inventor: HAN, Yufang, Shenzhen, Guangdong 518057 (CN)
(74) Representative: Boult Wade Tennant LLP
(86) International application number: PCT/CN2023/075278
(87) International publication number: WO 2024/007584

(57) **Abstract**

The implementation manners of the present application relate to the technical field of data processing, and in particular, to a routing information processing method and system, and a network device and a storage medium. The routing information processing method comprises: acquiring a redundancy protection capability of a BGP notification node; on the basis of a preset attribute adding policy and according to the redundancy protection capability, adding a first attribute to first BGP routing information of the BGP notification node, so as to generate BGP routing information, wherein the first attribute contains redundancy protection information, and the BGP routing information contains color information and end node information; and sending the BGP routing information to a BGP receiving node, which communicates with the BGP notification node, such that the BGP receiving node performs diversion processing on the BGP routing information according to the redundancy protection information, the color information and the end node information.

## Description

### CROSS REFERENCE TO RELATED APPLICATIONS

The disclosure claims the priority to the Chinese patent application No.202210794009.9 filed on July 5, 2022.

### TECHNICAL FIELD

Embodiments of the disclosure relate to the technical field of data processing, and particularly relate to a routing information processing method and system, a network device, and a storage medium.

### BACKGROUD

For implementation of the deterministic technology in the layer L3, the Internet engineering task force (IETF) standard organization has proposed deterministic networking (DetNet). Its main goal is to achieve network convergence, for instance, integrate time-sensitive non-IP networks into public network infrastructure, thus providing deterministic services for networks.

However, DetNet service configuration is generally performed in a centralized control mode, in which computation and configuration depend on a controller. Moreover, workload of the DetNet service configuration is directly related to performance of the controller. Thus, heavy workload of the DetNet service configuration will be caused by poor performance of the controller.

### SUMMARY

A main objective of embodiments of the disclosure is to provide a routing information processing method and system, a network device, and a storage medium. Thus border gateway protocol (BGP) routing information satisfying redundancy protection can be automatically created or selected by a BGP notification node, and configuration workload of high-reliability services in large-scale deterministic networking can be reduced accordingly.

In order to achieve the above objective, an embodiment of the disclosure provides a routing information processing method. The method is applied to a border gateway protocol (BGP) notification node. The method includes: acquiring a redundancy protection capability of the BGP notification node; adding, on the basis of a preset attribute adding policy and according to the redundancy protection capability, a first attribute to first BGP routing information of the BGP notification node, so as to generate BGP routing information, where the first attribute includes redundancy protection information, and the BGP routing information includes color information and end node information; and sending the BGP routing information to a BGP receiving node in communication with the BGP notification node, such that the BGP receiving node performs diversion processing on the BGP routing information according to the redundancy protection information, the color information, and the end node information.

In order to achieve the above objective, an embodiment of the disclosure further provides a routing information processing method. The method is applied to a border gateway protocol (BGP) receiving node. The method includes: receiving BGP routing information, carrying a first attribute, sent by a BGP notification node, where the BGP routing information is generated by adding, by the BGP notification node, the first attribute to first BGP routing information of the BGP notification node according to a redundancy protection capability of the BGP notification node, the first attribute includes redundancy protection information, and the BGP routing information further includes color information and end node information; parsing the BGP routing information, so as to acquire the redundancy protection information, the color information, and the end node information; and performing diversion processing on the BGP routing information according to the redundancy protection information, the color information, and the end node information on the basis of a preset diversion policy.

In order to achieve the above objective, an embodiment of the disclosure further provides a routing information processing system. The system includes: a BGP notification node and a BGP receiving node. The BGP notification node is configured to acquire a redundancy protection capability of the BGP notification node; add, on the basis of a preset attribute adding policy and according to the redundancy protection capability, a first attribute to first BGP routing information of the BGP notification node, so as to generate BGP routing information, where the first attribute includes redundancy protection information, and the BGP routing information further includes color information and end node information; and send the BGP routing information to a BGP receiving node in communication with the BGP notification node. The BGP receiving node is configured to receive the BGP routing information, carrying the first attribute, sent by the BGP notification node; parse the BGP routing information, so as to acquire the redundancy protection information, the color information, and the end node information; and perform diversion processing on the BGP routing information according to the redundancy protection information, the color information, and the end node information on the basis of a preset diversion policy.

In order to achieve the above objective, an embodiment of the disclosure further provides a network device. The network device includes: at least one processor; and a memory communicatively connected to the at least one processor. The memory stores an instruction executable by the at least one processor. The instruction is executed by the at least one processor, such that the at least one processor is caused to execute the routing information processing method.

In order to achieve the above objective, an embodiment of the disclosure further provides a computer-readable storage medium. The computer-readable storage medium stores a computer program. The computer program is executed by a processor, so as to implement the routing information processing method.

In the routing information processing method according to the disclosure, during processing of the routing information of the BGP notification node, the redundancy protection capability of the BGP notification node is acquired; the first attribute is added to the first BGP routing information of the BGP notification node according to the redundancy protection capability on the basis of the preset attribute adding policy, so as to generate the BGP routing information, where the first attribute includes the redundancy protection information, and the BGP routing information includes the color information and the end node information; and the BGP routing information is sent to the BGP receiving node in communication with the BGP notification node, such that the BGP receiving node performs diversion processing on the BGP routing information according to the redundancy protection information, the color information, and the end node information. In this way, the BGP routing information satisfying redundancy protection can be automatically created or selected by the BGP notification node according to the redundancy protection capability, such that configuration workload of high-reliability services in large-scale deterministic networking can be reduced, and a technical problem of heavy workload of service configuration in deterministic networking caused by service configuration by means of a controller can be solved.

### BRIEF DESCRIPTION OF THE DRAWINGS

Fig. 1 is a flow diagram of a routing information processing method according to an embodiment of the disclosure;
Fig. 2 is a schematic diagram of an L3VPN service of deterministic networking (DetNet) according to an embodiment of the disclosure;
Fig. 3 is a flow diagram of a routing information processing method according to an embodiment of the disclosure;
Fig. 4 is a flow diagram of a routing information processing method according to an embodiment of the disclosure;
Fig. 5 is a schematic diagram of a diversion policy of a routing information processing method according to an embodiment of the disclosure;
Fig. 6 is a schematic diagram of a diversion policy of a routing information processing method according to an embodiment of the disclosure;
Fig. 7 is a flow diagram of a routing information processing method according to an embodiment of the disclosure;
Fig. 8 is a schematic structural diagram of a routing information processing system according to an embodiment of the disclosure; and
Fig. 9 is a schematic structural diagram of a network device according to an embodiment of the disclosure.

### DETAILED DESCRIPTION

In order to make objectives, technical solutions and advantages of embodiments of the disclosure clearer, all the embodiments of the disclosure will be described below in detail with reference to accompanying drawings. However, those of ordinary skill in the art can understand that many technical details have been set forth in all the embodiments of the disclosure such that readers can better understand the disclosure. However, even without those technical details and various changes and modifications on the basis of the following embodiments, technical solutions to be protected by the disclosure can be implemented. All the following embodiments are divided for convenience of description, and should not impose any limitation on specific embodiments of the disclosure. All the examples can be combined with each other and cited without contradiction.

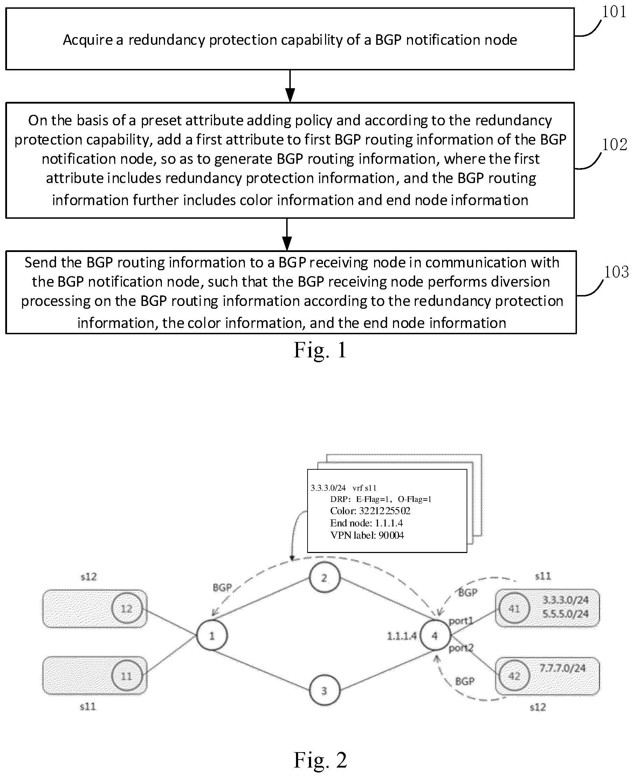

One embodiment of the disclosure relates to a routing information processing method. The method is applied to a border gateway protocol (BGP) notification node. As shown in Fig. 1, the method includes the following steps:

In step 101, a redundancy protection capability of the BGP notification node is acquired.

In an illustrative example, for a service protection technology defined by deterministic networking (DetNet), a packet replication function (PRF) generally needs to be provided for a source node or a service access node of the DetNet, and a packet elimination function (PEF) and a packet ordering function (POF) generally need to be provided for an outgoing node or an end node of the network. Therefore, the redundancy protection capability actually indicates whether the BGP notification node has the packet replication function, the packet elimination function and the packet ordering function.

In an illustrative example, according to different partition granularities of the BGP notification node, the redundancy protection capability of the BGP notification node includes different contents. For instance, when a node serves as the partition granularity, the redundancy protection capability is a node redundancy protection capability. When the node redundancy protection capability is that a node supports redundancy protection, it is indicated that the BGP notification node has the packet replication function, the packet elimination function, and the packet ordering function. When each port of the BGP notification node serves as the partition granularity, the redundancy protection capability is a redundancy protection capability of each port. When the port redundancy protection capability of certain port is that the port supports redundancy protection, it is indicated that certain port of the BGP notification node has the packet replication function, the packet elimination function, and the packet ordering function.

In step 102, on the basis of a preset attribute adding policy and according to the redundancy protection capability, a first attribute is added to first BGP routing information of the BGP notification node, so as to generate BGP routing information. The first attribute includes redundancy protection information. The BGP routing information further includes color information and end node information.

In an illustrative example, the attribute adding policy is preset according to the partition granularity of the BGP notification node. When the redundancy protection capability is the node redundancy protection capability, the preset attribute adding policy is a node-based attribute adding policy. When the redundancy protection capability is the redundancy protection capability of each port, the preset attribute adding policy is a port-based attribute adding policy. The first attribute is an opaque extended community attribute type, and may include the redundancy protection information. The BGP routing information further includes other information such as color information and end node information, and contents included in the BGP routing information are not limited herein. BGP routing information may include other information that can be used for diversion in addition to the first attribute, the color information and the end node information.

In an illustrative example, the node-based attribute adding policy comprises: upon the condition that the node redundancy protection capability is that a node supports redundancy protection, the first attribute is added to the first BGP routing information of the BGP notification node, so as to generate the BGP routing information, alternatively, the first attribute is added to designated BGP routing information of the BGP notification node, so as to generate the BGP routing information. The port-based attribute adding policy comprises: upon the condition that the port redundancy protection capability is a port supports redundancy protection, the first attribute is added to the first BGP routing information, received by means of a port corresponding to the port redundancy protection capability, in the BGP notification node, so as to generate the BGP routing information, or, the first attribute is added to the designated BGP routing information, received by means of a port corresponding to the port redundancy protection capability, in the BGP notification node, so as to generate the BGP routing information. The first BGP routing information is any routing information sent via the BGP notification node. The designated routing information is the first BGP routing information including preset designated information.

In an illustrative example, as shown in Fig. 2, with an L3VPN service of deterministic networking (DetNet) as an instance, a provider edge (PE) node 4 is connected to customer edge (CE) nodes 41 and 42, and a PE node 1 is connected to CE nodes 11 and 12, which belong to virtual routing forwarding (VRF) s11 and s22, respectively. The CE node 41 notifies prefixes 3.3.3.0/24 and 5.5.5.0/24 to the node 4 through the BGP, and the CE node 42 notifies a prefix 7.7.7.0/24 to the node 4 through the BGP. When the node 4 is a BGP notification node, if the node redundancy protection capability is that the node supports redundancy protection, the first attribute may be added to all BGP routing information with the prefixes 3.3.3.0/24, 5.5.5.0/24 and 7.7.7.0/24 released by the node 4, or the first attribute may be added to designated BGP routing information with the prefix 3.3.3.0/24 released by the node 4. When the node 4 is a BGP notification node, if the node redundancy protection capability is that port 1 supports redundancy protection, the first attribute may be added to all the BGP routing information with prefixes 3.3.3.0/24 and 5.5.5.0/24, which is received by the port 1 and released by the node 4, or the first attribute may be added to designated BGP route information with the prefix 3.3.3.0/24, which is received through the port 1 and released by the node 4.

In step 103, the BGP routing information is sent to a BGP receiving node in communication with the BGP notification node, such that the BGP receiving node performs diversion processing on the BGP routing information according to the redundancy protection information, the color information, and the end node information.

In an illustrative example, after the first attribute is added to the first BGP routing information by the BGP notification node so as to generate the BGP routing information, the BGP routing information may be sent to the BGP receiving node in communication with the BGP notification node. After the BGP routing information is received by the BGP receiving node, the redundancy protection information of the first attribute and the color information and the end node information in the BGP routing information may be parsed from the BGP routing information. Then, diversion processing is performed on the BGP routing information according to the redundancy protection information, the color information, and the end node information. In addition, when the BGP routing information further includes other information for diversion processing, diversion processing needs to be performed according to the redundancy protection information, the color information, the end node information and other information for diversion processing.

In the embodiment, during processing of the routing information of the BGP notification node, the redundancy protection capability of the BGP notification node is acquired; the first attribute is added to the first BGP routing information of the BGP notification node according to the redundancy protection capability on the basis of the preset attribute adding policy, so as to generate the BGP routing information, where the first attribute includes the redundancy protection information, and the BGP routing information includes the color information and the end node information; and the BGP routing information is sent to the BGP receiving node in communication with the BGP notification node, such that the BGP receiving node performs diversion processing on the BGP routing information according to the redundancy protection information, the color information, and the end node information. In this way, the BGP routing information satisfying redundancy protection can be automatically created or selected by the BGP notification node according to the redundancy protection capability, such that configuration workload of high-reliability services in large-scale deterministic networking can be reduced, and a technical problem of heavy workload of service configuration in deterministic networking caused by service configuration by means of a controller can be solved.

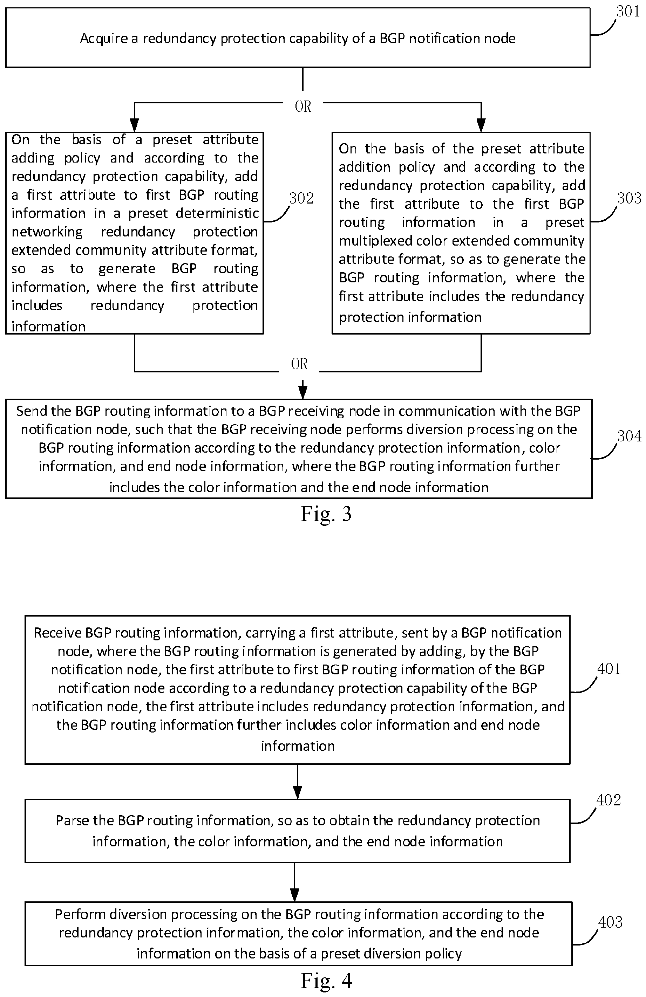

One embodiment of the disclosure relates to a routing information processing method. The method is applied to a border gateway protocol (BGP) notification node. As shown in Fig. 3, the method includes the following steps:

In step 301, a redundancy protection capability of the BGP notification node is acquired.

In an illustrative example, the step is basically consistent with the step 101 of the embodiment of the disclosure, and will not be repeated herein.

In step 302, on the basis of a preset attribute adding policy and according to the redundancy protection capability, a first attribute is added to first BGP routing information in a preset deterministic networking redundancy protection extended community attribute format, so as to generate BGP routing information. The first attribute includes redundancy protection information.

In an illustrative example, after a content and an attribute adding policy indicated by the redundancy protection capability are determined, the first attribute may be added to the first BGP routing information in the deterministic networking redundancy protection extended community attribute format. The deterministic networking redundancy protection extended community attribute format is as shown in Table 1:

**Table 1 Deterministic networking redundancy protection extended community attribute format**

| | | | | |
|---|---|---|---|---|
| 0×03 (1 Octet) | Type Low (1 Octet) | E-Flag | O-Flag | Reserved |
| Occupy 0-7 bytes | Occupy 8th-15th bytes | Occupy a 16th byte | Occupy a 17th byte | Occupy 18th-31th bytes |

The type high byte and the type low byte indicate types of an extended community attribute. The type high byte of 0x03 indicates that the extended community attribute is a transitive opaque extended community attribute type, and the type low byte indicates a deterministic networking (DetNet) redundancy protection extended community attribute format, where a specific type value may be arbitrarily assigned. E-Flog indicates whether to provide a packet elimination function and a packet replication function, occupies 1 bit, indicates that the function is provided when being 0, and indicates that the function is provided when being 1. O-Flog indicates whether to provide a packet ordering function, occupies 1 bit, indicates that the function is provided when being 0, and indicates that the function is provided when being 1. Reserved indicates a reserved field for subsequent extension. E-Flag and O-Flag indicate the redundancy protection information of the first attribute.

In step 303, the first attribute is added to the first BGP routing information in a preset multiplexed color extended community attribute format according to the redundancy protection capability on the basis of the preset attribute adding policy, so as to generate the BGP routing information. The first attribute includes the redundancy protection information.

In an illustrative example, a color extended community attribute is defined through an existing Internet engineering task force (IETF) standard, and a color may indicate a specific intention or a service level agreement. For instance, color 30 indicates low delay, and color 20 indicates only passing a blue network plane. Therefore, after a content and an attribute adding policy indicated by the redundancy protection capability are determined, the first attribute may be added to the first BGP routing information in the multiplexed color extended community attribute format. The multiplexed color extended community attribute format is as shown in Table 2:

**Table 2 Multiplexed color extended community attribute format**

| | | | | | | |
|---|---|---|---|---|---|---|
| 0×03 | | | 0×0b | CO-Flag | R-Flag | Reserved Flags |
| Occupy 0-7 bytes | | | Occupy 8th-15th bytes | Occupy 16th-21th bytes | Occupy a 22th byte | Occupy 23th-31th bytes |
| E-Flag | O-Flag | Color Value | | | | |

0x03 indicates that the first attribute is a transitive opaque extended community attribute type. 0x0b indicates that the first attribute is a multiplexed color extended community attribute format. CO-Flag and Color Value are both defined in RFC9012 and draft-ietf-idr-segment-routing-te-policy, and will not be repeated herein. R-Flag indicates whether to support redundancy protection, occupies 1 bit, indicates that highest 2 bits of Color Value are configured to carry deterministic redundancy protection information and E-Flag and O-flag are used when set as 1, and indicates an original color extended community attribute format when set as 0. E-Flog indicates whether to provide a packet elimination function and a packet replication function, occupies 1 bit, indicates that the function is provided when being 0, and indicates that the function is provided when being 1. O-Flog indicates whether to provide a packet ordering function, occupies 1 bit, indicates that the function is provided when being 0, and indicates that the function is provided when being 1.

In step 304, the BGP routing information is sent to a BGP receiving node in communication with the BGP notification node, such that the BGP receiving node performs diversion processing on the BGP routing information according to the redundancy protection information, the color information, and the end node information. The BGP routing information further includes the color information and the end node information.

In an illustrative example, the step is basically consistent with step 103 of the embodiment of the disclosure, and will not be repeated herein.

It is to be noted herein that two parallel modes of adding the first attribute, that is, a mode of adding the first attribute to the first BGP routing information in the multiplexed color extended community attribute format, and a mode of adding the first attribute to the first BGP routing information in the deterministic networking redundancy protection extended community attribute format, are provided. In an actual implementation process, it is necessary to select only one of the two modes instead of both the two modes to add the first attribute.

In the embodiment, on the basis of the other embodiments, adding the first attribute to the first BGP routing information in two modes, that is, in the multiplexed color extended community attribute format or in the deterministic networking redundancy protection extended community attribute format, may be provided, such that diversity of adding the first attribute in the disclosure can be improved.

One embodiment of the disclosure relates to a routing information processing method. The method is applied to a border gateway protocol (BGP) receiving node. As shown in Fig. 4, the method includes the following steps:

In step 401, BGP routing information, carrying a first attribute, sent by a BGP notification node is received. The BGP routing information is generated by adding, by the BGP notification node, the first attribute to first BGP routing information of the BGP notification node according to a redundancy protection capability of the BGP notification node. The first attribute includes redundancy protection information. The BGP routing information further includes color information and end node information.

In an illustrative example, the first attribute is added to the first BGP routing information by the BGP notification node according to the redundancy protection capability, so as to generate the BGP routing information, and then the BGP routing information carrying the first attribute is sent to the BGP receiving node. The BGP routing information received by the BGP receiving node carries the first attribute, the first attribute includes the redundancy protection information, and the BGP routing information further includes the color information and the end node information.

In step 402, the BGP routing information is parsed, so as to acquire the redundancy protection information, the color information, and the end node information.

In an illustrative example, the BGP routing information is parsed through two steps: first, the first attribute, the color information and the end node information are parsed from the BGP routing information, and second, the redundancy protection information is parsed from the first attribute.

In an illustrative example, adding the first attribute in two modes may be provided. Therefore, when the first attribute is parsed, whether the first attribute is added in the multiplexed color extended community attribute format or in the deterministic networking redundancy protection extended community attribute format is firstly determined according to information carried in the 8th-15th bytes. If the first attribute is added in the multiplexed color extended community attribute format, whether the Color Value carries the redundancy protection information needs to be determined according to an R-Flag flag bit, and then the corresponding redundancy protection information needs to be determined according to an E-Flag flag bit and an O-Flag flag bit. If the first attribute is added in the deterministic networking redundancy protection extended community attribute format, the corresponding redundancy protection information is determined directly according to an E-Flag flag bit and an O-Flag flag bit.

In step 403, diversion processing is performed on the BGP routing information according to the redundancy protection information, the color information, and the end node information on the basis of a preset diversion policy.

In an illustrative example, diversion information preset by the BGP receiving node may be an on-demand next-hop (ODN) template or segment routing policy (SR Policy) information. Each diversion information corresponds to a diversion policy.

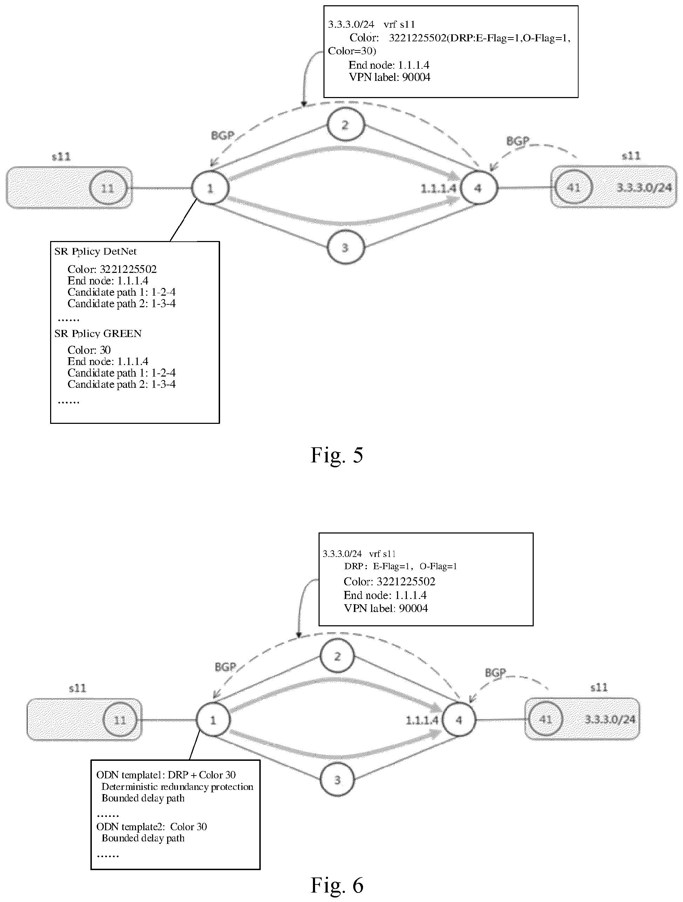

In an illustrative example, when the diversion information preset by the BGP receiving node is segment routing policy (SR Policy) information, as shown in Fig. 5, with an L3VPN service of the deterministic networking (DetNet) as an instance, a PE node 4 is connected to a CE node 41, and a PE node 1 is connected to a CE node 11, which belongs to VRF s11. The CE node 41 notifies a prefix 3.3.3.0/24 to the node 4 through BGP, and the PE node 4 adds redundancy protection information to all BGP routing information with the prefix 3.3.3.0/24 released by the PE node 1. The PE node 1 is configured with two SR policies as follows: one is SR Policy DetNet, where a color is 3221225502 (highest 2 bits are set to 1, which indicates that a deterministic redundancy protection service level agreement (SLA) may be provided, and meanwhile a color value is 30, which indicates that a DetNet bounded delay and a jitter SLA may be provided), and an end point is a loopback address 1.1.1.4 of the PE node 4; and the other one is SR Policy GREEN, where a color is 30 (which indicates that a DetNet bounded delay and a jitter SLA are provided), and an end point is a loopback address 1.1.1.4 of the PE node 4. Both the SR policies include two candidate paths: candidate path 1 is 1-->2-->4, and candidate path 2 is 1-->3-->4.

In an illustrative example, as shown in Fig. 5, the PE node 4 is a BGP notification node, and the PE node 1 is a BGP receiving node. In the figure, the first attribute including the redundancy protection information in the BGP routing information sent by the PE node 4 is added in the multiplexed color extended community attribute format, or in the deterministic networking redundancy protection extended community attribute format. After the BGP routing information is received by the PE node 1, the redundancy protection information, the color information and the end node information are acquired from the BGP routing information, and include 3221225502 (the highest 2 bits are both set to 1, which indicates that the redundancy protection capability may be provided and the color value is 30) and 1.1.1.4 (which indicates that both the redundancy protection information and the color information are displayed in the color information in the multiplexed color extended community attribute format). The redundancy protection information, the color information and the end node information that are acquired from the BGP routing information are matched with information corresponding to the SR Policy DetNet and the SR Policy GREEN, and the SR Policy matched with the BGP routing information is determined as the SR Policy DetNet. Then, a corresponding forwarding entry is configured, and the BGP routing information with a prefix of VRF s11 of 3.3.3.0/24 is guided to the SR Policy DetNet and forwarded. When the BGP routing information is forwarded, sequence information needs to be added to the BGP routing information (as required), and the BGP routing information is duplicated into a plurality of copies, which are forwarded on the candidate path 1 and the candidate path 2. Meanwhile, if the duplicated BGP routing information and the plurality of copies are received by the other BGP nodes, the plurality of copies may be eliminated. If no SR Policy DetNet matched with the BGP routing information exists on the PE node 1, the redundancy protection information is ignored, and the color information 30 and the end node information 1.1.1.4 are used to be matched with the color information and the end node information of the SR Policy, so as to acquire the SR Policy GREEN.

In an illustrative example, when the diversion information preset by the BGP receiving node is an on-demand next-hop (ODN) template, as shown in Fig. 6, with an L3VPN service of the deterministic network (DetNet) as an instance, PE node 4 is connected to CE node 41, and PE node 1 is connected to CE node 11, which belongs to VRF s11. The CE node 41 notifies a prefix 3.3.3.0/24 to the node 4 through BGP, and the PE node 4 adds redundancy protection information to all BGP routing information with the prefix 3.3.3.0/24 released by the PE node 1. Two ODN templates are configured on the PE node 1. One is ODN template 1, where the ODN template of DRP+ color 30 specifies a candidate path for dynamic computation, and a deterministic redundancy protection and bounded delay SLA is provided. The other one is ODN template 2, where the ODN template of color 30 specifies a candidate path for dynamic computation, and a bounded delay SLA is provided.

In an illustrative example, as shown in Fig. 6, the PE node 4 is a BGP notification node, and the PE node 1 is a BGP receiving node. In the figure, the first attribute including the redundancy protection information in the BGP routing information sent by the PE node 4 is added in the deterministic networking redundancy protection extended community attribute format, or in the multiplexed color extended community attribute format. The PE node 1 acquires, from the received BGP routing information, the redundancy protection information, the color information and the end node information: E-Flag=10-Flag=1, 30 and 1.1.1.4. The acquired redundancy protection information and color information are matched with the ODN templates on the PE node 1, and the OND template 1 matched with the redundancy protection information and the color information is acquired. Then, candidate diversion paths (candidate path 1: 1-->2-->4 and candidate path 2: 1-->3-->4) are generated according to the ODN template 1 and the end node information. Diversion processing is performed on the BGP routing information on the candidate diversion paths. Meanwhile, when the BGP routing information is forwarded, sequence information needs to be added to the BGP routing information (as required), and the BGP routing information is duplicated into a plurality of copies, which are forwarded on the candidate path 1 and the candidate path 2. Meanwhile, if the duplicated BGP routing information and the plurality of copies are received by the other BGP nodes, the plurality of copies may be eliminated. If no OND template 1 matched with the redundancy protection information and the color information exists on the PE node 1, the redundancy protection information is ignored, the OND template 2 matched with the color information 30 is acquired, and candidate path generation and diversion operations are performed.

In the embodiment, during processing of the routing information of the BGP receiving node, the BGP routing information, carrying the first attribute, sent by the BGP notification node is received. The BGP routing information is generated by adding, by the BGP notification node, the first attribute to the first BGP routing information of the BGP notification node according to the redundancy protection capability of the BGP notification node, the first attribute includes the redundancy protection information, and the BGP routing information further includes the color information and the end node information; the BGP routing information is parsed, so as to acquire the redundancy protection information, the color information, and the end node information; and diversion processing is performed on the BGP routing information according to the redundancy protection information, the color information, and the end node information on the basis of the preset diversion policy. Thus, the BGP routing information satisfying redundancy protection can be automatically created or selected by the BGP notification node according to the redundancy protection capability, configuration workload of high-reliability services in large-scale deterministic networking can be reduced, and a technical problem of heavy workload of service configuration in deterministic networking caused by service configuration by means of a controller can be solved.

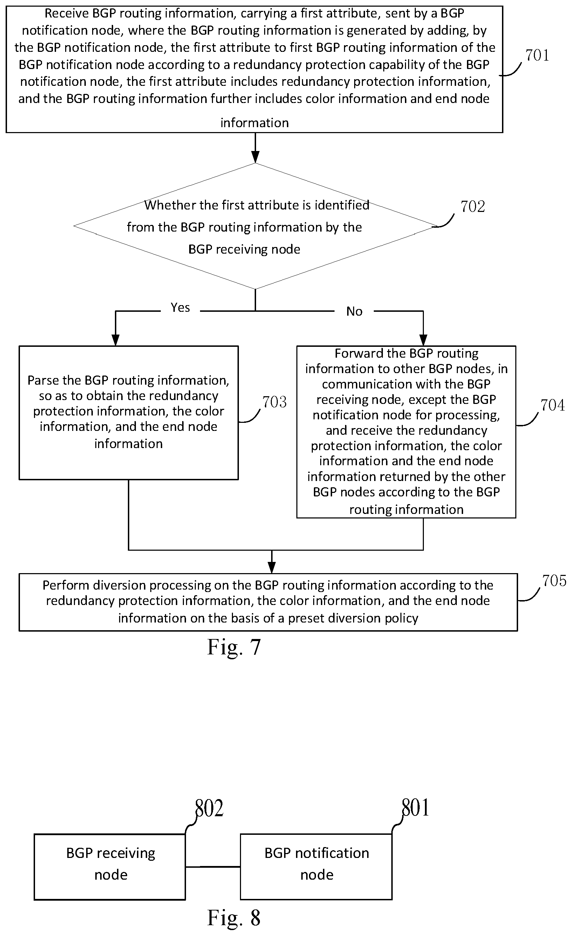

One embodiment of the disclosure relates to a routing information processing method. The method is applied to a border gateway protocol (BGP) receiving node. As shown in Fig. 7, the method includes the following steps:

In step 701, BGP routing information, carrying a first attribute, sent by a BGP notification node is received. The BGP routing information is generated by adding, by the BGP notification node, the first attribute to first BGP routing information of the BGP notification node according to a redundancy protection capability of the BGP notification node. The first attribute includes redundancy protection information. The BGP routing information further includes color information and end node information.

In an illustrative example, the step is basically consistent with step 401 of the embodiment of the disclosure, and will not be repeated herein.

In step 702, whether the first attribute is identified from the BGP routing information by the BGP receiving node is detected.

In an illustrative example, due to attribute capability difference of the BGP receiving node, the BGP receiving node may fail to identify the first attribute from the BGP routing information. Therefore, before the BGP routing information is parsed, whether the first attribute can be identified from the BGP routing information by the BGP receiving node needs to be determined. When the first attribute is identified from the BGP routing information by the BGP receiving node, step 603 may be executed. When the first attribute is not identified from the first attribute by the BGP receiving node, step 604 may be executed.

In step 703, the BGP routing information is parsed, so as to acquire the redundancy protection information, the color information, and the end node information.

In an illustrative example, the step is basically consistent with step 402 of the embodiment of the disclosure, and will not be repeated herein.

In step 704, the BGP routing information is forwarded to other BGP nodes, in communication with the BGP receiving node, except the BGP notification node for processing, and the redundancy protection information, the color information and the end node returned by the other BGP nodes according to the BGP routing information are received.

In an illustrative example, when the BGP receiving node fails to acquire the first attribute from the BGP routing information, the BGP routing information needs to be sent to the other BGP nodes, in communication with the BGP receiving node, except the BGP notification node by the BGP receiving node, and the first attribute may be acquired from the BGP routing information by the other BGP nodes. In this way, the other BGP nodes may parse the BGP routing information, so as to acquire the redundancy protection information, the color information and the end node, and the acquired redundancy protection information, color information and end node are returned to the BGP receiving node.

In step 705, diversion processing is performed on the BGP routing information according to the redundancy protection information, the color information, and the end node information on the basis of a preset diversion policy.

In an illustrative example, the step is basically consistent with step 403 of the embodiment of the disclosure, and will not be repeated herein.

In the embodiment, on the basis of the other embodiments, when the BGP receiving node fails to parse the received first attribute, the first attribute may be sent to the other BGP nodes that may parse the first attribute, and parsing results of the first attribute returned by the other BGP nodes may be received, such that the disclosure can ensure that the BGP receiving node may acquire the redundancy protection information, the color information and the end node.

The steps of all the above methods are divided for convenience of description, and may be combined into one step or divided into a plurality of steps during implementation, which fall within the protection scope of the disclosure as long as they include the same logical relation. Any changes through addition of insignificant modification or introduction of insignificant design to the algorithm or process should fall within the protection scope of the disclosure if they do not change the core design of the algorithm and process.

Another embodiment of the disclosure relates to a routing information processing system. The routing information processing system according to the embodiment will be specifically described in detail below. The following contents are only implementation details for convenience of understanding, and are not necessary for implementation of the example. Fig. 8 is a schematic diagram of a routing information processing system according to the embodiment. The system includes: a BGP notification node 801 and a BGP receiving node 802.

The BGP notification node 801 is configured to acquire a redundancy protection capability of the BGP notification node; on the basis of a preset attribute adding policy and according to the redundancy protection capability, add a first attribute to first BGP routing information of the BGP notification node, so as to generate BGP routing information, where the first attribute includes redundancy protection information, and the BGP routing information further includes color information and end node information; and send the BGP routing information to the BGP receiving node in communication with the BGP notification node.

The BGP receiving node 802 is configured to receive the BGP routing information, carrying the first attribute, sent by the BGP notification node, parse the BGP routing information, so as to acquire the redundancy protection information, the color information, and the end node information, and perform diversion processing on the BGP routing information according to the redundancy protection information, the color information, and the end node information on the basis of a preset diversion policy.

The embodiment is a system embodiment corresponding to the above method embodiment. The embodiment can be implemented in cooperation with the above method embodiment. Related technical details and technical effects mentioned in the above embodiments are still valid in the embodiment, and will not be repeated herein for repetition reduction. Accordingly, the related technical details mentioned in the embodiment can also be applied to the above embodiments.

The system embodiment mainly describes the routing information processing method according to the method embodiment at a software implementation level. Implementation of the method further needs to be supported by hardware. For instance, functions of related modules may be deployed on a processor, such that the processor may operate and implement the corresponding functions. Particularly, related data generated by operation may be stored in a memory for later inspection and use.

All modules involved in the embodiment are logic modules. In practical application, one logic unit may be a physical unit or a part of a physical unit, and may also be implemented by a combination of a plurality of physical units. Further, in order to highlight the innovative part of the disclosure, units less closely related to the technical problem of the disclosure are not introduced in the embodiment, which does not indicate exclusion of other units in the embodiment.

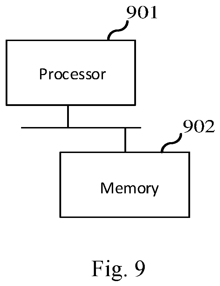

Another embodiment of the disclosure relates to a network device. As shown in Fig. 9, the network device includes: at least one processor 901; and a memory 902 communicatively connected to the at least one processor 901. The memory 902 stores an instruction executable by the at least one processor 901. When the instruction is executed by the at least one processor 901, the at least one processor 901 is caused to execute the routing information processing method according to all the above embodiments.

The memory and the processor are connected by means of a bus. The bus may include any number of interconnected bus bodies and bridges. The bus connects various circuits of one or more processors and the memory together. The bus may further connect various other circuits, such as peripheral devices, voltage regulators and power management circuits, which are well known in the art and will not be further described herein. A bus interface provides an interface between the bus and a transceiver. The transceiver may be one or more elements, such as a plurality of receivers and transmitters, and provides a unit for communication with various other apparatuses on a transmission medium. Data processed by the processor are sent on a wireless medium by means of an antenna. Further, the antenna receives the data and transmits the data to the processor.

The processor is responsible for managing the bus and general processing, and may further provide various functions, including timing, peripheral interface, voltage regulation, power management, and other control functions. The memory may be configured to store data used by the processor during operation execution.

Another embodiment of the disclosure relates to a computer-readable storage medium, which stores a computer program. The computer program is executed by a processor, so as to implement the method embodiment.

That is, those skilled in the art can understand that all or some steps in the method of the above embodiment may be completed by instructing related hardware with a program. The program is stored in a storage medium and includes several instructions to enable a device (which may be a single chip microcomputer, a chip, etc.) or a processor to execute all or some steps of the methods of all the embodiments of the disclosure. The above storage medium includes: a USB flash disk, a mobile hard disk, a read-only memory (ROM), a random access memory (RAM), a magnetic disk, an optical disk, and other media capable of storing program codes.

Those of ordinary skill in the art can understand that all the above embodiments are specific embodiments for implementing the disclosure. In practical application, various changes may be made in form and detail without departing from the spirit and scope of the disclosure.

## Claims

1. A routing information processing method, applied to a border gateway protocol called BGP notification node, comprising:
acquiring a redundancy protection capability of the BGP notification node;
adding, on the basis of a preset attribute adding policy and according to the redundancy protection capability, a first attribute to first BGP routing information of the BGP notification node, so as to generate BGP routing information, wherein the first attribute comprises redundancy protection information, and the BGP routing information comprises color information and end node information; and
sending the BGP routing information to a BGP receiving node in communication with the BGP notification node, such that the BGP receiving node performs diversion processing on the BGP routing information according to the redundancy protection information, the color information, and the end node information.

2. The routing information processing method according to claim 1, wherein the redundancy protection capability is a node redundancy protection capability or a redundancy protection capability of each port, and the attribute adding policy is a node-based attribute adding policy or a port-based attribute adding policy;
the node-based attribute adding policy comprises: upon the condition that the node redundancy protection capability is a node supports redundancy protection, adding the first attribute to the first BGP routing information of the BGP notification node, so as to generate the BGP routing information, or, adding the first attribute to designated BGP routing information of the BGP notification node, so as to generate the BGP routing information; and
the port-based attribute adding policy comprises: upon the condition that the port redundancy protection capability is a port supports redundancy protection, adding the first attribute to the first BGP routing information, received by means of a port corresponding to the port redundancy protection capability, in the BGP notification node, so as to generate the BGP routing information, or, adding the first attribute to the designated BGP routing information, received by means of a port corresponding to the port redundancy protection capability, in the BGP notification node, so as to generate the BGP routing information, wherein
the designated BGP routing information is the first BGP routing information comprising preset designated information.

3. The routing information processing method according to any one of claims 1-2, wherein adding, on the basis of the preset attribute adding policy and according to the redundancy protection capability, the first attribute to the first BGP routing information of the BGP notification node, so as to generate the BGP routing information, comprises:
adding, on the basis of the attribute adding policy and according to the redundancy protection capability, the first attribute to the first BGP routing information in a preset deterministic networking redundancy protection extended community attribute format, so as to generate the BGP routing information; or,
adding, on the basis of the attribute adding policy and according to the redundancy protection capability, the first attribute to the first BGP routing information in a preset multiplexed color extended community attribute format, so as to generate the BGP routing information.

4. A routing information processing method, applied to a border gateway protocol called BGP receiving node, comprising:
receiving BGP routing information, carrying a first attribute, sent by a BGP notification node, wherein the BGP routing information is generated by adding, by the BGP notification node, the first attribute to first BGP routing information of the BGP notification node according to a redundancy protection capability of the BGP notification node, the first attribute comprises redundancy protection information, and the BGP routing information further comprises color information and end node information;
parsing the BGP routing information, so as to acquire the redundancy protection information, the color information, and the end node information; and
performing diversion processing on the BGP routing information according to the redundancy protection information, the color information, and the end node information on the basis of a preset diversion policy.

5. The routing information processing method according to claim 4, wherein performing diversion processing on the BGP routing information according to the redundancy protection information, the color information, and the end node information on the basis of the preset diversion policy, comprises:
acquiring preset on-demand next-hop (ODN) templates of the BGP receiving node;
acquiring a first ODN template matched with the redundancy protection information and the color information from the ODN templates, and generating candidate diversion paths according to the first ODN template and the end node information; or,
acquiring, in response to failing to acquire the first ODN template, a second ODN template matched with the color information from the ODN templates, and generating candidate diversion paths according to the second ODN template and the end node information; and
performing diversion processing on the BGP routing information according to the candidate diversion paths.

6. The routing information processing method according to claim 4, wherein performing diversion processing on the BGP routing information according to the redundancy protection information, the color information, and the end node information on the basis of the preset diversion policy, comprises:
acquiring pieces of preset segment routing policy information of the BGP receiving node; and
acquiring first segment routing policy information matched with the redundancy protection information, the color information and the end node information from the pieces of segment routing policy information, and performing diversion processing on the BGP routing information on the basis of candidate diversion paths corresponding to the first segment routing policy information; or,
acquiring, in response to failing to acquire the first segment routing policy information, second segment routing policy information matched with the color information and the end node information from the pieces of segment routing policy information, and performing diversion processing on the BGP routing information on the basis of candidate diversion paths corresponding to the second segment routing policy information.

7. The routing information processing method according to any one of claims 4-6, wherein parsing the BGP routing information, so as to acquire the first attribute, the color information, and the end node information comprises:
detecting whether the first attribute is identified from the BGP routing information by the BGP receiving node; and
parsing, in response to determining that the first attribute is identified by the BGP receiving node, the BGP routing information, so as to acquire the redundancy protection information, the color information, and the end node information; or
forwarding, in response to determining that the first attribute is not identified by the BGP receiving node, the BGP routing information to other BGP nodes, in communication with the BGP receiving node, except the BGP notification node for processing, and receiving the redundancy protection information, the color information and the end node returned by the other BGP nodes according to the BGP routing information.

8. A routing information processing system, comprising: a BGP notification node and a BGP receiving node, wherein
the BGP notification node is configured to acquire a redundancy protection capability of the BGP notification node; add, on the basis of a preset attribute adding policy and according to the redundancy protection capability, a first attribute to first BGP routing information of the BGP notification node, so as to generate BGP routing information, wherein the first attribute comprises redundancy protection information, and the BGP routing information further comprises color information and end node information; and send the BGP routing information to a BGP receiving node in communication with the BGP notification node; and
the BGP receiving node is configured to receive the BGP routing information, carrying the first attribute, sent by the BGP notification node; parse the BGP routing information, so as to acquire the redundancy protection information, the color information, and the end node information; and perform diversion processing on the BGP routing information according to the redundancy protection information, the color information, and the end node information on the basis of a preset diversion policy.

9. A network device, comprising:
at least one processor; and
a memory communicatively connected to the at least one processor, wherein
the memory stores an instruction executable by the at least one processor, and the instruction is executed by the at least one processor, such that the at least one processor is caused to execute the method for processing a routing report according to any one of claims 1-3 or any one of claims 4-7.

10. A computer-readable storage medium, storing a computer program, wherein the computer program is executed by a processor, so as to implement the method for processing a routing report according to any one of claims 1-3 or any one of claims 4-7.
